# EUROPÄISCHE PATENTSCHRIFT

(11) **EP 2 668 036 B1**
(45) Veröffentlichungstag und Bekanntmachung des Hinweises auf die Patenterteilung: **29.06.2022**
(21) Anmeldenummer: 11802905.7
(22) Anmeldetag: 16.12.2011
(51) Int. Cl.: B32B 27/32, C08J 9/12

(54) **VERFAHREN ZUR HERSTELLUNG EINER MEHRSCHICHTIGEN KUNSTSTOFFFOLIE**
METHOD FOR PRODUCING A MULTI-LAYER PLASTIC FILM
PROCÉDÉ DE PRODUCTION D'UN FILM PLASTIQUE MULTICOUCHE

(30) Priorität: 28.01.2011 DE 102011000399
(43) Veröffentlichungstag der Anmeldung: 04.12.2013
(73) Patentinhaber: Benecke-Kaliko AG, 30419 Hannover (DE)
(72) Erfinder: HÜLSEWEDE, Volker, 73114 Schlat (DE); MALNER, Thomas, 73033 Göppingen (DE); MANI, Joseph, 73054 Eislingen (DE); BÜHRING, Jürgen, 30900 Wedemark (DE)
(74) Vertreter: Continental Corporation
(86) Internationale Anmeldenummer: PCT/EP2011/073075
(87) Internationale Veröffentlichungsnummer: WO 2012/100880

(56) Entgegenhaltungen:
- WO-A1-2006/047060
- DE-A1- 3 722 139

## Beschreibung

Die Erfindung betrifft ein Verfahren zur Herstellung einer mehrschichtigen Kunststofffolie mit mindestens einer kompakten Deckschicht und mindestens einer unter der Deckschicht angeordneten Schicht aus extrudiertem geschäumten Kunststoff (Schaumschicht), bei dem nach der Extrusion und der Abkühlung der Schaumschicht unterhalb Schmelztemperatur die kompakte Deckschicht thermisch oder durch Verkleben mit der Schaumschicht verbunden wird. Ferner betrifft die Erfindung eine Kunststoffzusammensetzung für die Schaumschicht zur Durchführung des Verfahrens und eine nach dem Verfahren hergestellte mehrschichtige Kunststofffolie sowie deren Verwendung.

Im Bereich der dekorativen Flächenmaterialien auf der Basis von Polyolefinen werden im Moment im Wesentlichen zwei Konstruktionen verwendet. Für Anwendungen und Bauteile, in denen das Flächenmaterial in nachgeschalteten thermischen Umformprozessen einer starken Verstreckung (z. B. > 200 %) unterworfen ist, werden bevorzugt kompakte Folienkonstruktionen, die aus mehreren Schichten aufgebaut sein können, verwendet. Diese Materialien weisen in der Regel eine Dichte von > 800 kg/m³ bei einer Dicke von 0,5 - 3,0 mm auf, wodurch die Bauteile ein entsprechend hohes Gewicht und damit einhergehend einen hohen Rohmaterialbedarf haben, siehe auch DE 10018196 A1.

Für Anwendungen und Bauteile, in denen das Flächenmaterial in nachgeschalteten thermischen Umformprozessen einer geringen Verstreckung (z. B. < 200 %) unterworfen ist, können Flächenmaterialien mit mindestens einer geschäumten Schicht, sogenannte Schaumschichten, eingesetzt werden. Die kompakte Deckschicht kann reduziert werden und in einer Dicke von 0,2 - 0,8 mm bei einer Dichte von > 800 kg/m³ ausgebildet sein. Die geschäumte Schicht wird in der Regel mit einer Dichte von 20 - 200 kg/m³ und einer Dicke von 0,5 - 4,0 mm ausgebildet. Die geschäumte Schicht reagiert elastisch auf Druckbelastung, wodurch eine angenehme Druckhaptik der Bauteile erhalten wird. Durch die geringe Dichte der geschäumten Schicht sinkt das Gewicht der Bauteile sowie der für die Herstellung notwendige Rohmaterialbedarf.

In allgemeiner Form wird ein Kunststoff-Schaummaterial basierend auf einer Polyolefinzusammensetzung wie folgt hergestellt: Es werden 5 - 100 Gew.-% eines oder mehrerer auf Polyethylen basierender Kunststoffe (darunter werden Polymere verstanden, deren Gewichtsanteil an Ethylen > 50 Gew.-% ist) sowie gegebenenfalls 0-95 Gew.-% eines oder mehrerer auf Polypropylen basierender Kunststoffe (darunter werden Polymere verstanden, deren Gewichtsanteil an Polypropylen > 50 Gew.-% ist) mit einem Vernetzungsmittel und einem chemischen Treibmittel (Schaummittel) sowie weiteren Prozessadditiven wie z. B. Gleitmittel, Stabilisatoren und Pigmenten gemischt. Hieraus wird z. B. durch Extrusion eine Folie hergestellt. Diese Folie wird im nachfolgenden Prozessschritt einer ionisierenden Strahlungsquelle ausgesetzt, so dass die Schmelzefestigkeit durch Molekulargewichtsaufbau (Vernetzung) im Kunststoff erhöht wird. In einem darauf folgenden Erhitzungsprozess wird mit Hilfe des Treibmittels ein flächiges Kunststoffschaummaterial mit einer Dichte von 20 - 200 kg/m³ und einer Dicke von 0,5 - 4,0 mm erhalten. Der Schäumprozess kann vertikal in einem Schäumofen oder horizontal z. B. in einem Salzbad durchgeführt werden. Der vorstehend beschriebene, chemisch getriebene Schäumprozess führt zu feinzelligen Schäumen mit sehr gleichmäßiger Schaumzellenverteilung. Derartige Schäume werden z. B. in der DE 102005050524 A1 beschrieben.

Das so erhaltenen Kunststoff-Schaummaterial kann anschließend thermisch oder durch Verkleben mit Oberflächenmaterialien wie z. B. Flächenmaterialien auf der Basis von Polyolefinen, PVC oder Polyurethanen verbunden werden, so dass ein mehrlagiges Flächengebilde mit mindestens einer geschäumten Schicht entsteht. Die Oberfläche des mehrlagigen Flächengebildes kann durch einen Prägeprozess mit einer dreidimensionalen Struktur, der sogenannten Narbe, ausgebildet werden.

Das so erhaltene Flächengebilde kann dann durch Prozesse wie z. B. Thermoformen, In-Mould Graining oder Low-pressure-moulding in eine gewünschte Form gebracht werden. Diese Formen oder Körper finden Verwendung in Flugzeugen, Bahnfahrzeugen, Schiffen und in Kraftfahrzeugen, insbesondere als Kraftfahrzeuginnenverkleidungen oder - verkleidungsteile.

Das US Patent 4,473,665 beschreibt ein Verfahren, bei dem ein KunststoffSchaummaterial basierend auf einer Polyolefinzusammensetzung dadurch hergestellt wird, dass die Polymermischung oberhalb des Glasübergangtemperatur mit einem inerten Gas unter Überdruck beladen wird und diese gasbeladene Schmelze anschließend entspannt und unter die Glasübergangstemperatur abgekühlt wird. Nach diesem Verfahrensprinzip lässt sich über Extrusion oder einen Spritzgußprozess ein Kunststoff-Schaummaterial basierend auf einer Polyolefin Zusammensetzung mit einer Dichte von 20 kg/m³ - 800 kg/m³ erzeugen. Nach diesem Prinzip erzeugte Flächenmaterialien zeigen im Dichtebereich < 100 kg/m³ in der Regel eine grobzellige Schaumstruktur mit breiterer Zellgrößenverteilung.

Die so erzeugten geschäumten polyolefinbasierten Flächenmaterialien finden unter anderem Anwendung im Baubereich (z. B. als Trittschallschutz bei Laminatböden, Wärmeisolierung von Rohren, Randstreifen bei der Bodenverlegung) und im Verpackungsbereich. Aufgrund des überwiegend thermoplastischen Charakters der nach diesem Verfahrensprinzip dargestellten Flächenmaterialien eignen sie sich bisher nicht für oben beschriebenen thermischen Umformprozess zur Herstellung dreidimensional geformter Körper zur Verwendung z. B. als Kraftfahrzeuginnenverkleidungen oder -verkleidungsteilen.

Weitere Verfahren zur Herstellung von mehrschichtigen Kunststofffolien sind z. B. bekannt durch die folgenden Schriften:
WO 2008148918 A1
EP 291764 B1
EP 297293 A2
EP 413912 B1
EP 2027995 A1
JP 2001-096602 A
JP 2005-119274 A
WO 9961520 A1
Darüber hinaus offenbart die WO 20062006/047060 A1 eine Kunststoffzusammensetzung für einen Schaumstoff, enthaltend Polyethylen, Polypropylen, Inertgas und Nukleierungsmittel. Eine Schmelzfestigkeit des Polyethylens ist dort nicht näher beschrieben.

Für die Erfindung bestand die Aufgabe, eine tiefziehbare Schaumfolie als mehrschichtige Kunststoffolie mit mindestens einer geschäumten Schicht herzustellen, welche bei niedrigen Dichtewerten genügend Stabilität bei Verstreckungsgraden von > 300 %, bevorzugt > 400 %, besonders bevorzugt > 500 %, beim Tiefziehen besitzt und welche auch thermisch umgeformt werden kann und trotzdem ausreichende Druck- und Wärmestabilität aufweist.

Gelöst wird die Aufgabe durch ein Verfahren mit den Merkmalen des Anspruchs 1.

Dabei wird die Schicht aus geschäumten Kunststoff dadurch erzeugt, dass die Kunststoffschmelze während des Extrusionsprozesses oberhalb der Schmelztemperatur mit einem unter Überdruck stehendem Treibmittel, insbesondere einem inerten Gas, durch Einblasen beladen wird und diese gasbeladene Schmelze anschließend bei Austritt aus der Extrusionsanlage entspannt und unterhalb der Schmelztemperatur abgekühlt wird. Die Schicht aus geschäumten Kunststoff wird also durch Einblasen von unter Überdruck stehendem Treibmittel in eine Kunststoffschmelze während des Extrusionsprozesses und durch anschließendes Entspannen des unter Überdruck stehenden Treibmittels erzeugt, wobei der geschäumte Kunststoff unvernetzt ist und erst nach dem Verbinden der Schaumschicht mit der kompakten Deckschicht gemeinsam mit letzterer vernetzt wird, insbesondere mit energiereicher Strahlung vernetzt wird.

Im Sinne einer ausgeprägten Schaumbildung wird vorteilhafterweise als Treibmittel ein inertes Gas eingesetzt oder ein Treibmittel eingesetzt, welches ein inertes Gas enthält.

Das so erhaltene Kunststoff-Schaummaterial wird anschließend thermisch oder durch Verkleben mit einer kompakten Deckschicht, in Form eines flächigen Materials wie z. B. Flächenmaterial auf der Basis von Polyolefinen, PVC oder Polyurethan verbunden, so dass eine mehrschichtige Kunststoffolie mit mindestens einer geschäumten Schicht entsteht.

Die Oberfläche der mehrschichtigen Kunststofffolie kann durch einen Prägeprozess mit einer dreidimensionalen Struktur, der sogenannten Narbe, ausgebildet werden, wobei vorteilhafterweise die Deckschicht vor der gemeinsamen Vernetzung in einem Prägeprozess mit einer dreidimensionalen Oberflächenstruktur (Narbung) versehen wird, um den Prägeprozess nicht zu erschweren.

In einer solchen vorteilhaften Ausbildung des Verfahrens entsteht ein Schaumfolienlaminat, bei dem der Schaum unvernetzt hergestellt worden ist und erst nach dem Präge- bzw. Laminierungsprozess das gesamte Laminat vernetzt wird. Der vorliegende Schaumstoff ist durch Extrusionsschäumen hergestellt, wobei eine Kunststoffzusammensetzung geschmolzen und mit gewünschten Zusätzen in einem Extruder vermischt wird. Das so erhaltene Flächengebilde erlaubt durch Prozesse wie z. B. Thermoformen, In-Mould Graining, Low-pressure-moulding die Erzeugung einer dreidimensionalen Oberflächenstruktur (Narbung). Durch eine nachträgliche Vernetzung der geschäumten Schicht wird die Thermoformbeständigkeit auch im Bereich niedriger Schaumdichten von < 300 kg/m³ erreicht.

Die Kunststoffschmelze für die Schaumschicht weist bei dem erfindungsgemäßen Verfahren in der Bügelzone (Düse) eine Scherviskosität von weniger als 10⁷ Pa·s, bevorzugt 10⁵ bis 10⁷ Pa·s, besonders bevorzugt 10⁵ bis 10⁶ Pa·s, bei einer Schmelzetemperatur von weniger als 230 °C, üblicherweise 200 - 220 °C, und einer Scherrate von weniger als 10³ s⁻¹ auf.

Die Dehnviskosität der Kunststoffschmelze in der Bügelzone beträgt weniger als 10⁷ Pa·s, bevorzugt 10⁵ bis 10⁷ Pa·s, besonders bevorzugt 10⁵ bis 10⁶ Pa·s, bei einer Schmelzetemperatur von weniger als 230 °C und einer Scherrate von 0,01 s⁻¹ bis 10² s⁻¹.

Die Schmelzefestigkeit des Extrudats ist so ausgeprägt, dass eine Kraft von mehr als 5 cN bei einer Dehnungsgeschwindigkeit von 200 mm/s und einer Schmelzetemperatur von 200 °C erreicht wird.

Gemäß einer vorteilhaften Weiterbildung der Erfindung erfolgt die Vernetzung des Laminats so, dass nach der Vernetzung die verbundenen Schichten, also das Laminat insgesamt, einen Gelgehalt von 10 - 80 %, bevorzugt 15 bis 65 %, besonders bevorzugt 15 bis 40 %, aufweisen, gemessen nach 24-stündiger Extraktion in siedendem Xylol. Ein Laminat mit einem solchem Gelgehalt weist die erforderliche Stabilität bei der weiteren Verarbeitung auf.

Die Vernetzung des Laminats kann mit energiereicher Strahlung, z. B. Elektronenstrahlung, erfolgen, wobei eine ausreichende Vernetzung Voraussetzung für den Erhalt der Narbe beim weiteren Verformungsprozess ist. Das erfindungsgemäße Verfahren führt zu einer sehr guten Narbstabilität beim Tiefziehen und zu sehr guten Tiefzieheigenschaften, sofern das Laminat anschließend vernetzt wird.

Eine weitere vorteilhafte Ausbildung der Erfindung besteht darin, dass das Treibmittel oder das inerte Gas nach ausreichendem Schmelzen und Mischen der Kunststoffschmelze in den Extruder eingespeist wird, insbesondere in unmittelbarer Nähe der Extruderaustrittsdüse. Die schäumbare Schmelze wird dann unter optimalen Druck- und Temperaturbedingungen durch eine Düse extrudiert.

Typische Schaum-Extrusionsanlagen, die für die Herstellung von physikalisch geschäumten Produkten zum Einsatz kommen können, sind beispielsweise Tandemextruder, Doppelschneckenextruder oder ein angekoppeltes Optifoam System (Fa. Sulzer) an einem Doppelschneckenextruder. Das Treibmittel oder das inerte Gas kann auf unterschiedliche Weise zudosiert werden, z. B. durch Direkteinspritzung im Extrudergehäuse, ein Optifoam System mit statischem Mischer, Einspritzung in die Extruderschnecke oder Einspritzung im Austragswerkzeug. Die Austrittsdüse kann unterschiedlich ausgebildet sein, z. B. in Form einer Breitschlitzdüse, einer Ringspaltdüse, einer Viellochdüse oder einer Blockschlitzdüse. Für eine gleichzeitige Extrusion von Deckschicht und geschäumter Schicht können auch Coextrusionsanlagen eingesetzt werden.

Eine weitere vorteilhafte Ausbildung der Erfindung besteht darin, dass im Inneren des Extruders vor der Extrusionsdüse ein Druck von mindestens 70 bar, bevorzugt mindestens 100 bar, besonders bevorzugt mindestens 120 bar, herrscht. Durch die Abnahme des Druckes von mehr als 70 bar vor der Düse auf Atmosphärendruck hinter der Düse expandiert die mit Treibmittel beladene Polymermischung so, dass ein durch und durch gleichmäßig geschäumtes Produkt gebildet wird. Durch dieses Herstellungsverfahren des Schaumes können Schaumdichten zwischen 20 bis 800 kg/m³ mit einer Schaumdicke von 0,5 bis 3,0 mm erreicht werden.

Als Treibmittel können z. B. H₂O oder Inertgase, ggf. in Kombination miteinander, eingesetzt werden.

Als Inertgase können bei dem Verfahren alle dem Fachmann bekannten Inertgase wie Helium oder andere Edelgase eingesetzt werden. Besonders vorteilhaft im Hinblick auf Preis, Umweltverträglichkeit und Schäumverhalten hat es sich jedoch erwiesen, wenn das inerte Gas CO₂ oder N₂ ist. Dabei wird das Gas, wie oben dargestellt, nach ausreichendem Schmelzen und Mischen der Bestandteile als physikalisches Treibmittel in den Extruder eingespeist und mit der Schmelze vermischt, bis eine gleichmäßige Verteilung entstanden ist.

Für gute Herstellbarkeit der mehrschichtigen Kunststofffolie bei guten Produkteigenschaften hat es sich als vorteilhaft erwiesen, dass bei dem Verfahren die Deckschicht und/oder die Schicht aus geschäumtem Kunststoff auf Polyolefinen, wie Polyethylen oder Polypropylen, basiert.

Vorzugsweise wird im weiteren Verlauf der Herstellung der mehrschichtigen Kunststofffolie die Deckschicht und die Schicht aus geschäumtem Kunststoff thermisch oder durch Verkleben mit weiteren auf Polymeren basierenden Schichten, z. B. aus Polyolefinen, PVC, Polyurethanen, Polyamiden, Polyestern, Polylactiden, Cellulose oder Lignin, verbunden.

Ebenso ist die Applikation eines auf der Dekorseite aufgebrachten Lackes für die Erzielung der Oberflächeneigenschaften wie die Kratzbeständigkeit vorteilhaft.

Um durch Einleiten geeigneter Gase ein kontrolliertes Aufschäumen der Kunststoffschmelze zu erreichen, sind in der Regel bestimmte rheologische Grundvoraussetzungen zu erfüllen. Die Viskosität der Kunststoffschmelze muss hoch genug sein, um ein stabiles geschäumtes System zu generieren, bei dem die Schaumzellen innerhalb eines bestimmten Rahmens eine gleichmäßige Schaumzellengrößenverteilung besitzen. Bei einer zu geringen Viskosität werden keine Zellen in kontrollierbarem Rahmen gebildet, weil das eingeleitete Gas aus der Schmelze entweichen kann. Weiter muss das geschäumte Material genügend Stabilität besitzen, um in einem nachfolgenden Prozessschritt mit einer weiteren Folienlage laminiert zu werden können, ohne dass das geschäumte Material kollabiert und wieder kompaktiert vorliegt.

Diese Anforderung an die Rheologie kann man in vorteilhafterweise dadurch lösen, dass die Schicht aus geschäumtem Kunststoff zumindest ein Polyolefin mit hoher Schmelzfestigkeit (High Melt Strength Polyolefin) aufweist. HMS-Polyethylen und HMS-Polypropylen weisen eine Dehnviskosität von 10⁴ bis 10⁷ Pa·s bei 190 °C, eine Hencky Strain Rate von 0,1 s⁻¹ und eine Hencky Strain von 3,0 auf. Derartige HMS-Polyolefine sind auf dem Markt von unterschiedlichen Herstellern erhältlich. Sie sind hochverzweigt und besitzen die Eigenschaft, bei niedrigen Scherraten viskoser zu sein als Polymere gleichen Molekulargewichtes aber mit geringerem Verzweigungsgrad, um bei hohen Scherraten einen stärkeren Abfall der Viskosität zu zeigen. Ein weiterer Lösungsweg ist die Verwendung hochviskoser linearer Polymere, welchen sogenannte Schaumstabilisatoren wie Fettsäureester zugesetzt werden.

Eine Kunststoffzusammensetzung für die Schaumschicht zur Durchführung des Verfahrens kann folgende Zusammensetzung aufweisen:
- 20 bis 80 Gew.-teile zumindest eines Polyethylens mit einer hohen Schmelzfestigkeit (HMS-PE),
- 20 bis 80 Gew.-teile zumindest eines Polypropylens,
- 0,05 bis 1,0 Gew.-teile zumindest eines Inertgases und
- 0,05 bis 1,0 Gew.-teile zumindest eines Nukleierungsmittels, wobei sich die Gewichtsteile der Polymere zu 100 addieren.

Weitere übliche Zuschlagstoffe, wie Füllstoffe, Alterungs- und Flammschutzmittel, können in üblichen Mengen in der Zusammensetzung enthalten sein.

Unter Polyethylenen sind dabei solche Polymere oder Copolymere zu verstehen, deren Gewichtsanteil an Ethylen > 50 Gew.-% liegt und unter Polypropylenen sind dabei solche Polymere oder Copolymere zu verstehen, deren Gewichtsanteil an Polypropylen > 50 Gew.-% liegt.

Mit dieser Zusammensetzung können Schaumschichten erhalten werden, die eine Schaumdichte von 200 bis 600 kg/m³ aufweisen und sich ohne Kollaps der Zellen tiefziehen lassen. Man kann so mehrschichtige Kunststofffolien mit geringem Gewicht erhalten. Der Anteil von 20 bis 80 Gew.-teile zumindest eines Polyethylens mit einer hohen Schmelzfestigkeit gewährleistet beim erhaltenen Produkt eine ausreichende Kälteflexibilität bei guter Weichheit und günstigen Produktpreis, während der Anteil von 20 bis 80 Gew.-teile zumindest eines Polypropylens für eine gute Wärmestabilität sorgt.

Als Treibmittel bzw. Inertgase können die vorne genannten Substanzen eingesetzt werden, wobei CO₂ oder N₂ die beste Zellstruktur ergeben. Die Gase werden unter erhöhtem Druck in flüssiger Form in die Zusammensetzung eingespeist.

Als Nukleierungsmittel (Nucleationsmittel, Keimbildner in Polymeren) können sowohl chemisch aktive Nukleierungsmittel (z. B. NaHCO₃) als auch physikalisch wirkende Nukleierungsmittel (z. B. Talkum, Siliziumoxid oder Titandioxid) eingesetzt werden. Die Nukleierungsmittel sind wichtig für eine optimale Zellstruktur.

Das Polyethylen mit einer hohen Schmelzfestigkeit weist dabei einen Schmelzflussindex MFI (190 °C, 2,16 kg gemäß ISO 1133) von 0,05 bis 2,0 g/10, vorzugsweise von 0,1 bis 1,0 g/10 min, auf. Dies gewährleistet ein gutes Extrusionsverhalten.

Es hat sich als vorteilhaft herausgestellt, dass das oder die Polypropylen(e) in der Kunststoffzusammensetzung ebenfalls eine hohe Schmelzfestigkeit (HMS-PP) aufweist bzw. aufweisen. Dies trägt ebenfalls zu einem guten Extrusionsverhalten unter Entstehung und Erhalt einer optimalen Schaumstruktur bei.

Die eingesetzten Polypropylene weisen vorzugsweise einen Schmelzflussindex MFI (230 °C, 2,16 kg gemäß ISO 1133) von 0,05 bis 8,0 g/10, vorzugsweise 1 bis 5 g/10 min, auf.

Die nach dem erfindungsgemäßen Verfahren hergestellte mehrschichtige Kunststofffolie kann in verschiedenen Bereichen eingesetzt werden. So eignet sie sich als Innenverkleidung eines Kraftfahrzeuges und ermöglicht es auch, Bauteile im Airbag-Bereich herzustellen, die vorteilhafterweise ohne Schwächungen oder Einschnitte für das Aufreißen des Laminats beim Öffnen des Airbags auskommen. Bei der mehrschichtigen Kunststofffolie besteht auch die Möglichkeit, dass geschäumte und kompakte Kunststoffschichten nebeneinander unter einer Deckschicht angeordnet sind, so dass in unterschiedlichen Bereichen des Laminats eine Anpassung bezüglich der Haptik erfolgen kann.

Anhand von Vergleichs- und Ausführungsbeispielen, die in der Tabelle 1 dargestellt sind, soll die Erfindung näher erläutert werden.

**Tabelle 1**

| **Bestandteile** | **Vergleichsbeispiel** | **Erfindungsgemäßes Beispiel 1** | **Erfindungsgemäßes Beispiel 2** |
|---|---|---|---|
| | Rezeptur für eine Kompaktfolie | Rezeptur für erfindungsgemäßes Verfahren | Rezeptur für erfindungsgemäßes Verfahren |
| PE^{a)} | 60 | 60 | 60 |
| PP^{b)} | 40 | 40 | 40 |
| Inertgas/Treibmittel^{c)} | - | 0,30 | 0,15 |
| Nukleierungsmittel^{d)} | - | 0,1 | 0,3 |
| Antioxidationsmittel^{e)} | 0,3 | 0,3 | 0,3 |
| Pigmente | 1 | 1 | 1 |
| Dichte bei einer Dicke von 1,00 mm | 900 kg/m³ | 500 kg/m³ | 500 kg/m³ |
| Dehnung bei Höchstzugkraft bei 120 °C (ISO 527-3) | | | |
| längs | 395 % | 425 % | 435 % |
| quer | 477 % | 500 % | 550 % |

| | | | |
|---|---|---|---|
| ^{a)} Ethylen-Buten-Copolymer, MFI = < 0,5 g/10min bei 190 °C; 2,16 kg, Dehnviskosität von 300 kPa·s bei 190 °C bei Hencky Strain Rate von 0,1 s⁻¹ und Hencky Strain von 3,0 ^{b)} homo-Polypropylen, MFI = 2,5 g/10min bei 230°C; 2,16 kg, Dehnviskosität von 10⁶ Pa·s bei 190 °C bei Hencky Strain Rate von 0,1 s⁻¹ und Hencky Strain von 3,0 ^{c)} flüssiges Kohlendioxid ^{d)} Hydrocerol^{®} NUC 5530, (Natriumhydrogencarbonat mit Zitronensäure als Masterbatch), Clariant, Deutschland ^{e)} sterisch gehindertes Phenol | | | |

In Tabelle 1 sind Mischungsrezepturen für eine kompakte Folie und für nach dem erfindungsgemäßen Verfahren schäumbare Schaumschichten angegeben, wobei die Mengen in Gewichtsteilen angegeben sind. Die Anteile der Polymere addieren sich dabei zu 100.

Ferner gibt die Tabelle 1 in der untersten Zeile die Dichten der aus den Zusammensetzungen erzeugten Folien an. Dabei wird ersichtlich, dass die geschäumten Folien ein deutlich geringes Gewicht aufweisen. Die mit erfindungsgemäßen Verfahren hergestellten Folien besitzen trotz niedrigerer Dichtewerte jedoch genügend Stabilität bei Verstreckungsgraden von mehr als 300 % beim Tiefziehen. Für die Dehnung bei Höchstzugkraft werden für das erfindungsgemäße Material deutlich höhere Werte erzielt, was sich positiv auf das Tiefziehverhalten auswirkt.

Durch das nach dem erfindungsgemäßen Verfahren hergestellte Schaumfolienlaminat wird eine Konstruktion zur Verfügung gestellt, die geringere Herstellungskosten aufweist, gute Tiefzieheigenschaft zeigt, Gewicht spart und durch den weniger aufwändigen Herstellungsprozess weniger Energie und Rohstoffe verbraucht. Durch das geringere Gewicht wird zusätzlich im Gebrauch Laminats im automobilen Innenraum weniger Energie zur Bewegung des Fahrzeuges benötigt.

## Patentansprüche

1. Verfahren zur Herstellung einer mehrschichtigen Kunststofffolie mit mindestens einer kompakten Deckschicht und mindestens einer unter der Deckschicht angeordneten Schicht aus extrudiertem geschäumten Kunststoff (Schaumschicht), bei dem nach der Extrusion und der Abkühlung der Schaumschicht unterhalb Schmelztemperatur die kompakte Deckschicht thermisch oder durch Verkleben mit der Schaumschicht verbunden wird, und bei dem die Schicht aus geschäumtem Kunststoff
- durch Einblasen von unter Überdruck stehendem Treibmittel in eine Kunststoffschmelze während des Extrusionsprozesses und
- durch anschließendes Entspannen des unter Überdruck stehenden Treibmittels erzeugt wird,
wobei der geschäumte Kunststoff zunächst unvernetzt ist und erst nach dem Verbinden der Schaumschicht mit der kompakten Deckschicht gemeinsam mit letzterer mit energiereicher Strahlung vernetzt wird.

2. Verfahren nach Anspruch 1, bei dem das Treibmittel ein inertes Gas ist oder ein inertes Gas enthält.

3. Verfahren nach Anspruch 1 oder 2, bei dem die Deckschicht vor der gemeinsamen Vernetzung in einem Prägeprozess mit einer dreidimensionalen Struktur versehen wird.

4. Verfahren nach Anspruch 1 bis 3, bei dem die Vernetzung so erfolgt, dass nach der Vernetzung die verbundenen Schichten (Laminat) einen Gelgehalt von 10 - 80 % aufweisen, gemessen nach 24-stündiger Extraktion in siedendem Xylol.

5. Verfahren nach einem der Ansprüche 1 bis 4, bei dem das Treibmittel oder das inerte Gas nach ausreichendem Schmelzen und Mischen der Kunststoffschmelze in den Extruder eingespeist wird, insbesondere in unmittelbarer Nähe der Extruderaustrittsdüse.

6. Verfahren nach einem der Ansprüche 1 bis 5, bei dem im Inneren des Extruders vor der Extrusionsdüse ein Druck von mindestens 70 bar herrscht.

7. Verfahren nach einem der Ansprüche 1 bis 6, bei dem das inerte Gas CO₂ oder N₂ ist.

8. Verfahren nach einem der Ansprüche 1 bis 7, bei dem die Deckschicht und/oder die Schicht aus geschäumtem Kunststoff auf Polyolefinen basiert.

9. Verfahren nach einem der Ansprüche 1 bis 8, bei dem die Deckschicht und die Schicht aus geschäumtem Kunststoff thermisch oder durch Verkleben mit weiteren auf Polymeren basierenden Schichten verbunden werden.

10. Verfahren nach einem der Ansprüche 1 bis 9, bei dem die Schicht aus geschäumtem Kunststoff zumindest ein Polyolefin mit hoher Schmelzfestigkeit (High Melt Strength Polyolefin) aufweist.

11. Kunststoffzusammensetzung für die Schaumschicht zur Durchführung des Verfahrens gemäß Anspruch 1 bis 10, **dadurch gekennzeichnet, dass** sie
- 20 bis 80 Gew.-teile zumindest eines Polyethylens mit einer hohen Schmelzfestigkeit (HMS-PE),
- 20 bis 80 Gew.-teile zumindest eines Polypropylens,
- 0,05 bis 1,0 Gew.-teile zumindest eines Inertgases und
- 0,05 bis 1,0 Gew.-teile zumindest eines Nukleierungsmittels enthält, wobei sich die Gewichtsteile der Polymere zu 100 addieren, wobei dass das oder die Polyethylen(e) mit einer hohen Schmelzfestigkeit einen Schmelzflussindex MFI (190 °C, 2,16 kg gemäß ISO 1133) von 0,05 bis 2,0 g/10 min aufweist bzw. aufweisen.

12. Kunststoffzusammensetzung für die Schaumschicht nach Anspruch 11, **dadurch gekennzeichnet, dass** das oder die Polypropylen(e) eine hohe Schmelzfestigkeit aufweist bzw. aufweisen (HMS-PP).

13. Kunststoffzusammensetzung für die Schaumschicht nach einem der Ansprüche 11 bis 12, **dadurch gekennzeichnet, dass** das oder die Polypropylen(e) einen Schmelzflussindex MFI (230 °C, 2,16 kg gemäß ISO 1133) von 0,05 bis 8,0 g/10 min aufweist bzw. aufweisen.

14. Mehrschichtige Kunststofffolie, hergestellt nach einem Verfahren gemäß Anspruch 1 bis 10.

15. Verwendung einer mehrschichtigen Kunststofffolie nach Anspruch 14 für die Beschichtung von Bauteilen für die Innenverkleidung von Fahrzeugen.

## Claims

1. Method for producing a multi-layer plastic film having at least one compact cover layer and at least one layer which is arranged under the cover layer and made of extruded foamed plastic (foam layer), in which, after the extrusion and cooling of the foam layer below melt temperature, the compact cover layer is joined to the foam layer thermally or by adhesion, and in which the layer of foamed plastic
- is generated by blowing propellant at superatmospheric pressure into a plastic melt during the extrusion process and
- by subsequent expansion of the propellant which is at superatmospheric pressure,
wherein the foamed plastic is at first not crosslinked and is crosslinked together with the compact cover layer by high-energy radiation only after the foam layer and the compact cover layer have been joined.

2. Method according to Claim 1, in which the propellant is an inert gas or contains an inert gas.

3. Method according to Claim 1 or 2, in which the cover layer, before the joint crosslinking, is provided with a three-dimensional structure in an embossing process.

4. Method according to Claims 1 to 3, in which the crosslinking proceeds in such a manner that, after the crosslinking, the joined layers (laminate) have a gel content of 10-80%, measured after 24 hours extraction in boiling xylene.

5. Method according to any one of Claims 1 to 4, in which the propellant or the inert gas, after sufficient melting and mixing of the plastic melt, is fed into the extruder, in particular in immediate vicinity of the extruder exit die.

6. Method according to any one of Claims 1 to 5, in which, in the interior of the extruder upstream of the extrusion die, a pressure of at least 70 bar prevails.

7. Method according to any one of Claims 1 to 6, in which the inert gas is CO₂ or N2.

8. Method according to any one of Claims 1 to 7, in which the cover layer and/or the layer of foamed plastic is based on polyolefins.

9. Method according to any one of Claims 1 to 8, in which the cover layer and the layer of foamed plastic are joined thermally or by adhesion to further polymerbased layers.

10. Method according to any one of Claims 1 to 9, in which the layer of foamed plastic comprises at least one High Melt Strength polyolefin.

11. Plastic composition for the foam layer for carrying out the method according to Claims 1 to 10, **characterized in that** it
- contains 20 to 80 parts by weight of a high melt strength polyethylene (HMS-PE),
- 20 to 80 parts by weight of at least one polypropylene,
- 0.05 to 1.0 parts by weight of at least one inert gas and
- 0.05 to 1.0 parts by weight of at least one nucleating agent, wherein the parts by weight of the polymers total 100, wherein the high melt strength polyethylene or polyethylenes has or have a melt flow index MFI (190°C, 2.16 kg as specified in ISO 1133) from 0.05 to 2.0 g/10 min.

12. Plastic composition for the foam layer according to Claim 11, **characterized in that** the polypropylene or polypropylenes has or have a high melt strength (HMS-PP).

13. Plastic composition for the foam layer according to either one of Claims 11 and 12, **characterized in that** the polypropylene or polypropylenes has or have a melt flow index MFI (230°C, 2.16 kg as specified in ISO 1133) from 0.05 to 8.0 g/10 min.

14. Multi-layer plastic film produced by a method according to Claims 1 to 10.

15. Use of a multi-layer plastic film according to Claim 14 for coating building components for the internal lining of motor vehicles.

## Revendications

1. Procédé pour la production d'un film de matière plastique multicouche comportant au moins une couche de recouvrement compacte et au moins une couche de matière plastique expansée (couche de mousse), extrudée, disposée sous la couche de recouvrement, dans lequel après l'extrusion de la couche de mousse et son refroidissement au-dessous de la température de fusion, la couche de recouvrement compacte est liée thermiquement ou par collage avec la couche de mousse, et dans lequel la couche de matière plastique expansée est produite
- par insufflation d'agent porogène, se trouvant sous une surpression, dans une masse fondue de matière plastique pendant le processus d'extrusion et
- par détente subséquente de l'agent porogène se trouvant sous une surpression,
la matière plastique expansée étant tout d'abord non réticulée et n'étant réticulée par un rayonnement à haute énergie, conjointement avec la couche de recouvrement compacte, qu'après la liaison de la couche de mousse avec cette dernière.

2. Procédé selon la revendication 1, dans lequel l'agent porogène est un gaz inerte ou contient un gaz inerte.

3. Procédé selon la revendication 1 ou 2, dans lequel la couche de recouvrement, avant la réticulation conjointe, est dotée d'une structure tridimensionnelle dans un processus de gaufrage.

4. Procédé selon l'une quelconque des revendications 1 à 3, dans lequel la réticulation s'effectue de telle façon qu'après la réticulation les couches assemblées (stratifié) présentent une teneur en gel de 10 - 80 %, mesurée après extraction pendant 24 heures dans du xylène bouillant.

5. Procédé selon l'une quelconque des revendications 1 à 4, dans lequel après fusion suffisante et homogénéisation de la masse fondue de matière plastique l'agent porogène ou le gaz inerte est introduit dans l'extrudeuse, en particulier à proximité immédiate de la filière de sortie de l'extrudeuse.

6. Procédé selon l'une quelconque des revendications 1 à 5, dans lequel une pression d'au moins 70 bars règne à l'intérieur de l'extrudeuse avant la filière d'extrusion.

7. Procédé selon l'une quelconque des revendications 1 à 6, dans lequel le gaz inerte est CO₂ ou N₂.

8. Procédé selon l'une quelconque des revendications 1 à 7, dans lequel la couche de recouvrement et/ou la couche de matière plastique expansée est/sont à base de polyoléfines.

9. Procédé selon l'une quelconque des revendications 1 à 8, dans lequel la couche de recouvrement et la couche de matière plastique expansée sont liées thermiquement ou par collage avec des couches supplémentaires à base de polymères.

10. Procédé selon l'une quelconque des revendications 1 à 9, dans lequel la couche de matière plastique expansée comporte au moins une polyoléfine à haute résistance à l'état fondu (polyoléfine High Melt Strength).

11. Composition de matière plastique pour la couche de mousse destinée à l'exécution du procédé selon l'une quelconque des revendications 1 à 10, **caractérisée en ce qu'**elle contient
- 20 à 80 parties en poids d'au moins un polyéthylène ayant une haute résistance à l'état fondu (HMS-PE),
- 20 à 80 parties en poids d'au moins un polypropylène,
- 0,05 à 1,0 partie en poids d'au moins un gaz inerte et
- 0,05 à 1,0 partie en poids d'au moins un agent de nucléation, la somme des parties en poids des polymère étant égale à 100, et **en ce que** le ou les polyéthylène(s) présente ou présentent, avec une haute résistance à l'état fondu, un indice de fluidité à chaud MFI (190 °C, 2,16 kg selon ISO 1133) de 0,05 à 2,0 g/10 min.

12. Composition de matière plastique pour la couche de mousse selon la revendication 11, **caractérisée en ce que** le ou les polypropylène(s) présente ou présentent une haute résistance à l'état fondu (HMS-PP).

13. Composition de matière plastique pour la couche de mousse selon l'une quelconque des revendications 11 et 12, **caractérisée en ce que** le ou les polypropylène(s) présente ou présentent un indice de fluidité à chaud MFI (230 °C, 2,16 kg selon ISO 1133) de 0,05 à 8,0 g/10 min.

14. Film de matière plastique multicouche produit conformément à un procédé selon l'une quelconque des revendications 1 à 10.

15. Utilisation d'un film de matière plastique multicouche selon la revendication 14 pour le revêtement d'éléments de construction pour l'habillage intérieur de véhicules.
